# EUROPÄISCHE PATENTSCHRIFT

(11) **EP 2 407 122 B1**
(45) Veröffentlichungstag und Bekanntmachung des Hinweises auf die Patenterteilung: **06.07.2016**
(21) Anmeldenummer: 10169856.1
(22) Anmeldetag: 16.07.2010
(51) Int. Cl.: A61C 13/20

(54) **Mikrowellenofen mit Drehteller**
Microwave oven with rotating disc
Four à micro-ondes doté d'un plateau rotatif

(43) Veröffentlichungstag der Anmeldung: 18.01.2012
(73) Patentinhaber: Ivoclar Vivadent AG, 9494 Schaan (LI)
(72) Erfinder: Jussel, Rudolf, 6805 Feldkirch-Gisingen (AT); Laubersheimer, Jürgen, 9470 Buchs (CH); Kettner, Philip, 6830 Rankweil (AT)
(74) Vertreter: Baronetzky, Klaus

(56) Entgegenhaltungen:
- EP-A1- 1 060 713
- FR-A1- 2 507 296
- JP-A- 2004 014 892

## Beschreibung

Die Erfindung betrifft einen Mikrowellenofen für die Wärmebehandlung wenigstens eines dentalen Restaurationsteils, gemäß dem Oberbegriff von Anspruch 1.

Derartige Mikrowellenöfen sind seit langem bekannt. Für die Erwärmung von Dentalprothesen ist es beispielsweise aus der DE 41 02 129 A1 bekannt, einen Mikrowellenofen mit einem Drehteller auszustatten und die Dentalprothese zur Härtung dort einzubringen. In an sich bekannter Weise soll mit dem Drehteller eine Vergleichmäßigung der eingebrachten Mikrowellenstrahlung realisiert werden.

Während es bei dieser Lösung um die Polymerisation von Dentalprothesen geht, ist es auch im Dentalbereich bekannt geworden, einen Drehteller mit einem Suszeptor zu kombinieren, wozu auf die WO 96/41500 zu verweisen ist (= DE 196 81 432 T1).

Ferner ist aus der EP 1 060 713 B1 die Verwendung eines Drehtellers in Kombination mit einem Suszeptorelement auch für das Brennen von Dentalkermiken bekannt geworden. Diese Lösung ist zwar an sich gut und die Verwendung von Mikrowellenstrahlung zur Aufheizung der Dentalkeramik stellt einen signifikanten Fortschritt dar. Trotz der Verwendung des Drehtellers wäre es jedoch günstig, die Erwärmungskurve der Dentalkeramik noch zu verbessern, gerade auch im Hinblick auf die in Dentallabors erwünschte kurze Taktzeit.

FR 2 507 296 A1 offenbart einen Mikrowellenofen für dentale Restaurationsteile.

Demgegenüber liegt der Erfindung die Aufgabe zu Grunde, einen Mikrowellenofen gemäß dem Oberbegriff von Anspruch 1 zu schaffen, der hinsichtlich des Heizzyklus verbessert ist, ohne dass die Gleichmäßigkeit der Erwärmung leiden würde.

Diese Aufgabe wird überraschend durch die Merkmale von Anspruch 1 gelöst. Vorteilhafte Weiterbildungen ergeben sich aus den Unteransprüchen.

Erfindungsgemäß überraschend lässt sich mit der Maßnahme, der Mikrowellen-Strahlungsquelle unterhalb des wenigstens teilweise mikrowellendichten Suszeptors anzuordnen, die Ankopplung der Mikrowellenquelle an den Suszeptor und damit indirekt an das Dentalmaterial deutlich verbessern. Der Suszeptor ist scheibenförmig oder hat gegebenenfalls eine Scheibe mit hochgezogenem Rand. Durch die Anordnung der Mikrowellenquelle unterhalb des Suszeptors lässt sich sicherstellen, dass die austretende Strahlung zunächst auf den Suszeptor trifft und nicht direkt auf die Dentalkeramik. Damit ist die bevorzugte indirekte Erwärmung in überraschend einfacher Weise sichergestellt. Der Suszeptor erwärmt dann das großflächig und in guter thermischer Verbindung dort aufliegende Dentalmaterial, das das dentale Restaurationsteil bildet, wobei erfindungsgemäß eine besonders gute Feldvergleichmäßigung der Mikrowellen-Strahlung entsteht. Der Suszeptor wirkt erfindungsgemäß zugleich als Modenrührer.

Die hochtemperaturstabile Aufnahme weist wenigstens eine Durchgangsbohrung oder eine seitliche Ausnehmung auf, durch welche hindurch das Temperaturmesselement die Temperatur des Suszeptors messen kann.

Es versteht sich, dass die Ankopplung insofern besonders günstig ist, wenn die Mikrowellen-Strahlungsquelle unterhalb des Suszeptors angeordnet ist. Auch wird ein gewisser seitlicher Versatz vorgenommen so dass die Strahlungsquelle unterhalb der Ebene des Suszeptors liegt, jedoch leicht radial außerhalb des scheibenförmigen Suszeptors. Ein Winkel von 45 Grad zur Senkrechten, gesehen ab den radialen Ende des Suszeptors, hat noch ohne Weiteres die erwünschten Wirkungen.

In vorteilhafter Ausgestaltung ist es vorgesehen, den Flächenschwerpunkt des Suszeptors zur Rotationsachse radial versetzt anzuordnen. Hierdurch wird die Gleichmäßigkeit der Erwärmung überraschend verbessert, denn bei der Rotation werden unterschiedlich intensiv Strahlung absorbierende Bereiche periodisch der Mikrowellen-Strahlungsquelle vorgesetzt, so dass günstigerweise teils intensivere und teil weniger intensive Mikrowellenstrahlung ausgenutzt werden kann. In diesem Zusammenhang versteht es sich, dass es günstig ist, die Mikrowellen-Strahlungsquelle etwas außerhalb der Rotationsachse des Drehtellers anzuordnen.

In modifizierter Ausgestaltung ist der Suszeptor im Wesentlichen topfförmig und insofern wenigstens teilweise geschlossen. Bei dieser Lösung ist auch die seitlich reflektierte Mikrowellenstrahlung vom Suszeptor aus absorbiert und dient dementsprechend zur Aufheizung des dentalen Restaurationsteils, bevor dieses bei einer erhöhten Temperatur von beispielsweise 700 oder 800 °C direkt an die Mikrowellenstrahlung ankoppelt.

Es versteht sich, dass als Drehteller entweder ein mikrowellendurchlässiger und dünner Drehteller, beispielsweise aus hochtemperaturfestem Glas, zum Einsatz gelangt, oder dass der Suszeptor selbst als Drehteller ausgebildet sein kann. Der Suszeptor kann beispielsweise aus Siliciumcarbid mit ausreichender Festigkeit bestehen, wobei es günstig ist, dass er auch bei nicht vorhandenen Dentalrestaurationsteil eine Grundlast für die Mikrowellenbeaufschlagung der Mikrowelle bildet.

Gemäß einer vorteilhaften Ausgestaltung ist es vorgesehen, dass der Flächenschwerpunkt des Suszeptors zur Rotationsachse des Suszeptors radial versetzt angeordnet ist.

Gemäß einer vorteilhaften Ausgestaltung ist es vorgesehen, dass sich der Flächenschwerpunkt des Suszeptors mit der Rotationsachse des Suszeptors deckt.

Gemäß einer vorteilhaften Ausgestaltung ist es vorgesehen, dass der Suszeptor in Form eines Ringes oder einer Scheibe ausgebildet ist und/oder wenigstens eine Auflagefläche für das dentaler Restaurationsteil aufweist.

Gemäß einer vorteilhaften Ausgestaltung ist es vorgesehen, dass der Suszeptor eine kreisrunde oder eine von der kreisrunden Form abweichende Außenkontur aufweist.

Gemäß einer vorteilhaften Ausgestaltung ist es vorgesehen, dass der Suszeptor wenigstens ein sich parallel zur Rotationsachse des Suszeptors erstreckendes insbesondere ringabschnittförmige Suszeptorelement aufweist.

Gemäß einer vorteilhaften Ausgestaltung ist es vorgesehen, dass der Suszeptor in Form eines insbesondere wenigstens teilweise geschlossenen Gefässes ausgebildet ist.

Gemäß einer vorteilhaften Ausgestaltung ist es vorgesehen, dass der Arbeitstemperaturbereich des Mikrowellenofens, der insbesondere ausschließlich mit Mikrowellenstrahlung arbeitet, zwischen Raumtemperatur und 2.200°C liegt.

Gemäß einer vorteilhaften Ausgestaltung ist es vorgesehen, dass der Innenraum des Mikrowellenofens gasdicht abgeschlossen ist und der Mikrowellenofen mit einem nach Wahl des Benutzers vorgegebenen Gas füllbar und/oder evakuierbar ist.

Gemäß einer vorteilhaften Ausgestaltung ist es vorgesehen, dass der oder die Suszeptoren fest mit dem Drehteller verbunden sind und auch bei nicht vorhandenem Dentalrestaurationsteil eine Grundlast für die Mikrowellenbeaufschlagung des Mikrowellenofens darstellen.

Gemäß einer vorteilhaften Ausgestaltung ist es vorgesehen, dass der mit dem Drehteller verbundener Suszeptor als Modenstirrer wirkt.

Gemäß einer vorteilhaften Ausgestaltung ist es vorgesehen, dass der Drehteller zugleich als Modenstirrer ausgebildet ist und fest mit dem Suszeptor als Tiegel oder Schale für die Aufnahme des Restaurationsteils verbunden ist.

Gemäß einer vorteilhaften Ausgestaltung ist es vorgesehen, dass auf dem oder im Suszeptor wenigstens eine hochtemperaturstabile Auflage angeordnet ist, die der Aufnahme des dentalen Restaurationsteiles dient.

Gemäß einer vorteilhaften Ausgestaltung ist es vorgesehen, dass auf dem oder im Suszeptor wenigstens eine hochtemperaturstabile Auflage angeordnet ist, die der Aufnahme des dentalen Restaurationsteiles dient.

Gemäß einer vorteilhaften Ausgestaltung ist es vorgesehen, dass über dem Suszeptor wenigstens eine fest in der Brennkammer angeordnete hochtemperaturstabile Auflage angeordnet ist, die der Aufnahme des dentalen Restaurationsteils dient.

Gemäß einer vorteilhaften Ausgestaltung ist es vorgesehen, dass der Suszeptor und/oder die hochtemperaturstabile Auflage und/oder das dentale Restaurationsteil mit einem Temperaturmesselement, insbesondere einem optischen Temperaturmasselement zusammenwirkt und insbesondere der Suszeptor und/oder der Antriebsmotor mit einer Messeinrichtung zur Messung der Mikrowellenleistung zusammenwirkt.

Gemäß einer vorteilhaften Ausgestaltung ist es vorgesehen, dass das optische Temperaturmesselement auf die Oberfläche des Suszeptors und/oder die hochtemperaturstabile Auflage und/oder die Oberfläche des dentalen Restaurationsteils ausgerichtet ist und der Schwerpunkt des Erfassungsbereiches des Temperaturmesselementes ausserhalb der Rotationsachse des Antriebsmotors liegt.

Gemäß einer vorteilhaften Ausgestaltung ist es vorgesehen, dass die Position des Suszeptors in Drehrichtung und/oder in vertikaler Richtung von dem Antriebsmotor veränderbar ist um die in der Messeinrichtung reflektierende Mikrowellenstrahlung zu minimieren.

Gemäß einer vorteilhaften Ausgestaltung ist es vorgesehen, dass das Temperaturmesselement die Temperatur an einem bestimmten Punkt oder Bereich des Suszeptors und/oder der hochtemperaturstabilen Auflage und/oder des dentalen Restaurationsteiles erfasst und der Antriebsmotor den Suszeptor zumindest um ein paar Grad rotieren lässt, wenn eine Abweichung von einer vorgegebenen Solltemperatur festgestellt wird.

Gemäß einer vorteilhaften Ausgestaltung ist es vorgesehen, dass der Suszeptor konstant verbleibt oder zeitlich begrenzt oder in Intervallen in die gleiche Richtung oder abwechselnd in unterschiedliche Richtungen verdrehbar ist und/oder dass der Suszeptor insbesondere während dessen Rotation vertikal verstellbar ist.

Gemäß einer vorteilhaften Ausgestaltung ist es vorgesehen, dass der Suszeptor eine Wärmeleitfähigkeit von mehr als 20 W/mK aufweist und insbesondere wenigstens teilweise eine Wandstärke von mindestens 0,5 mm aufweist.

Gemäß einer vorteilhaften Ausgestaltung ist es vorgesehen, dass der Suszeptor insbesondere als Schale oder Scheibe oder Tiegel mehrteilig ausgebildet ist.

Gemäß einer vorteilhaften Ausgestaltung ist es vorgesehen, dass der Suszeptor von einer scheibenförmigen Struktur gebildet ist, die sich aus wenigstens einer großflächigen Scheibe und/oder mehreren kleineren, insbesondere nebeneinander und/oder übereinander angeordneten scheiben-, ring-, stab- oder kugelförmigen Elementen zusammensetzt.

Weitere Vorteile, Einzelheiten und Merkmale der Erfindung ergeben sich aus der nachstehenden Beschreibung mehrerer Ausführungsbeispiele der Erfindung anhand der Zeichnung.

Es zeigt:
- Fig. 1: eine schematische Darstellung eines erfindungsgemäßen Mikrowellenofens in einer Ausführungsform;
- Fig. 2: eine schematische Ansicht einer weiteren Ausführungsform eines erfindungsgemäßen Mikrowellenofens;
- Fig. 3: eine schematische Ansicht einer dritten Ausführungsform eines erfindungsgemäßen Mikrowellenofens;
- Fig. 4: eine schematische Ansicht einer vierten Ausführungsform eines erfindungsgemäßen Mikrowellenofens;
- Fig. 5: eine schematische Ansicht einer fünften Ausführungsform eines erfindungsgemäßen Mikrowellenofens;
- Fig. 6: eine schematische Ansicht einer sechsten Ausführungsform eines erfindungsgemäßen Mikrowellenofens;
- Fig. 7: eine schematische Ansicht einer siebten Ausführungsform eines erfindungsgemäßen Mikrowellenofens;
- Fig. 8: eine schematische Ansicht einer Ausführungsform mit einer zum Brennraum und zur Drehachse kreissymmetrischen Ausgestaltung des Suszeptors für einen erfindungsgemäßen Mikrowellenofen;
- Fig. 9: eine Ansicht gemäß Fig. 8, wobei der Suszeptor jedoch asymmetrisch zur Drehachse gelagert ist;
- Fig. 10: eine weitere Ausführungsform in der Darstellung gemäß Fig. 8, wobei ein in der Draufsicht quadratischer Suszeptor zum Einsatz gelangt;
- Fig. 11: eine weitere Ausführungsform des Suszeptors in der Darstellung gemäß Fig. 8, wobei der Suszeptor im Wesentlichen handtelförmig ist, jedoch kreissymmetrisch gelagert ist;
- Fig. 12: eine weitere Ausführungsform eines Suszeptors in der Darstellung gemäß Fig. 8;
- Fig. 13: eine Ausführungsform eines ringförmigen Suszeptors, in der Darstellung gemäß Fig. 8; und
- Fig. 14: eine Suszeptoranordnung in einer anderen Ausführungsform, mit vier Einzelsuszeptoren, und im Übrigen in der Darstellung gemäß Fig. 8.

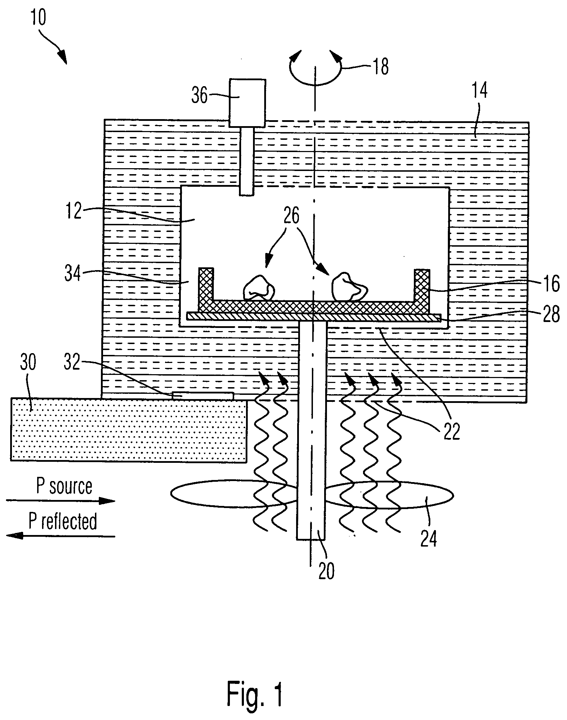

Der in Fig. 1 dargestellte Mikrowellenofen 10 weist eine Brennkammer 12 auf, die von wärmedämmenden Material 14 umgeben ist. Der Mikrowellenofen 10 ist mit einem nicht dargestellten Antriebsmotor versehen, der einen Suszeptor 16 um eine Rotationsachse 18 dreht. Hierzu kann der Antriebsmotor auf der Antriebswelle 20 angeordnet sein, aber auch über ein Getriebe seitlich neben der Antriebswelle 20 angeordnet sein. Im Beispielsfalle koaxial mit der Antriebswelle 20 ist eine Belüftung vorgesehen, die für die Zufuhr von Luft 22 über nicht dargestellte Ausnehmungen in dem Material 14 sorgt, wobei die Belüftung 24 in der Zeichnung gemäß Fig. 1 schematisch dargestellt ist. Die Belüftung 24 wird insbesondere eingeschaltet, um für eine nach Bedarf schnellere Kühlung nach Abschluss der Brennphase zu sorgen, oder während des Wärmebehandlungsprozesses die Brennkammer mit gewünschten, gasförmigen Medien zu versorgen.

In dem dargestellten Ausführungsbeispiel 16 ist der Suszeptor 16 scheibenförmig oder flach- topfförmig. Er dient der Aufnahme von dentalen Restaurationsteilen 26, die in Fig. 1 schematisch dargestellt sind. In diesem Ausführungsbeispiel ist der Suszeptor 16 auf einem Drehteller 28 aufliegend angebracht. Es versteht sich jedoch, dass er auch direkt auf der Antriebswelle 20 montiert sein kann. Erfindungsgemäß ist eine Mikrowellen-Strahlungsquelle 30 unterhalb des Suszeptors 16 angebracht. Sie weist einen Hohlleiterausgang 32 auf und beaufschlagt daher den Suszeptor 16 von unten, von der Seite also, die verhindert, dass die Mikrowellenstrahlung direkt auf die dentalen Restaurationsteile 26 fällt.

Zwischen dem Suszeptor 16 und der Wand der Brennkammer 12 besteht in dem dargestellen Ausführungsbeispiel ein Schlitz 34. Die Breite des Schlitzes 34 ist so gewählt, dass ein vorgegebener Anteil der Mikrowellenstrahlung auch dort seitlich durchtreten kann, der Hauptteil jedoch jedenfalls dem Suszeptor 16 zugeleitet wird.

In an sich bekannter Weise ist ein Temperatursensor 36 vorgesehen, beispielsweise ein Pyrometer, das die Temperatur des Brennraums und/oder die Temperatur der dentalen Restaurationsteile misst.

Erfindungsgemäß besonders günstig ist es, dass auch die Drehgeschwindigkeit des Suszeptors 16 in beliebiger geeigneter Weise einstellbar ist. Beispielsweise kann die Drehgeschwindigkeit zwischen 0,5 und 70 Umdrehungen pro Minute betragen, und es ist auch möglich, eine nicht-konstante oder getaktete Drehgeschwindigkeit zu realisieren, die auch in beiden Rotationsrichtungen vorgesehen sein kann.

Die maximale Temperatur für das Brennen der Dentalkeramik, die so erreichbar ist, beträgt 2.200 °C. Besonders günstig ist es auch, dass der Drehteller 28 so ausgebildet sein kann, dass er als Modenrührer für die eingespeisten Mikrowellen wirkt. Der Suszeptor hingegen weist bevorzugt eine sehr hohe Wärmeleitfähigkeit von mindestens 20 W/mK auf, und besteht erfindungsgemäß aus Siliciumcarbit und/oder Zirkoniumdioxid und/oder einer Mischung aus SiC und SiNi.

Um die reflektierende Mikrowellenenergie (P reflectid) gegenüber der eingespeisten Mikrowellenenergie (P source) zu minimieren, kann die Position des Suszeptors in Drehrichtung und/oder vertikaler Richtung verändert werden.

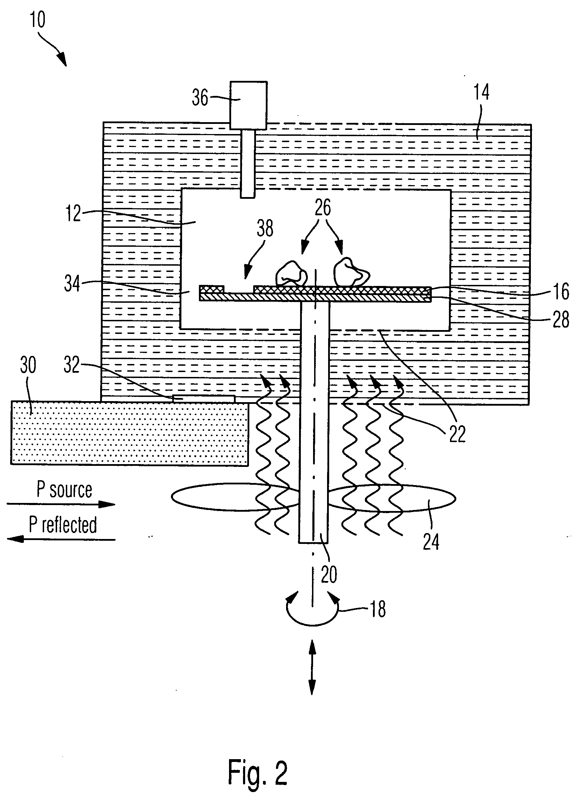

Die weiteren Ausführungsformen gemäß den Figuren 2 bis 7 weisen im Wesentlichen den gleichen Grundaufbau wie die Ausführungsform gemäß Fig. 1 auf, wobei gleiche Bezugszeichen auf gleiche Teile hinweisen.

Die zweite Ausführungsform gemäß Fig. 2 weist einen flachen, scheibenförmigen Drehteller 28 auf, auf dem ein ebenfalls flacher und scheibenförmiger Suszeptor 16 gelagert ist.

Der Drehteller 28 ist auf der Antriebswelle 20 gelagert, die in diesem Ausführungsbeispiel abgesehen von der Drehbarkeit um ihre Achse auch vertikal verfahrbar ist.

Bei dieser Ausgestaltung weist der Suszeptor 16, der eine hochtemperaturstabile Aufnahme bildet, mindestens eine Durchtrittsöffnung 28 auf, und die dentalen Restaurationsteile 26 sind neben der Durchtrittsöffnung 38 auf der hochtemperaturstabilen Aufnahme gelagert.

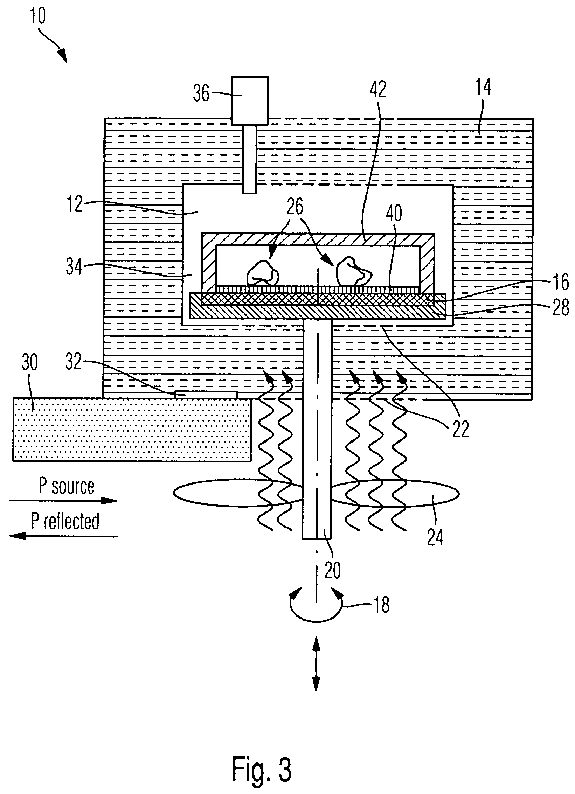

In der Darstellung gemäß Fig. 3 ist es im Unterschied hierzu vorgesehen, dass der Suszeptor 16 zweiteilig ausgebildet ist. Ein erster Teil ist flächig ausgebildet und in einer Vertiefung des Drehtellers 28 aufgenommen. Er ist mit einer hierzu separaten hochtemperaturstabilen Aufnahme 40 abgedeckt, auf der die dentalen Restaurationsteile 26 angeordnet sind.

Über den topfförmigen Aufbau des Suszeptors 16 gemäß Fig. 1 hinausgehend ist bei Fig. 3 eine Suszeptorhaube 42 vorgesehen, die bündig mit dem Suszeptorteller 16 im Übrigen abschließt und zusammen mit diesem einen Raum umgibt, der für die Aufnahme der dentalen Restaurationsteile 26 bestimmt ist.

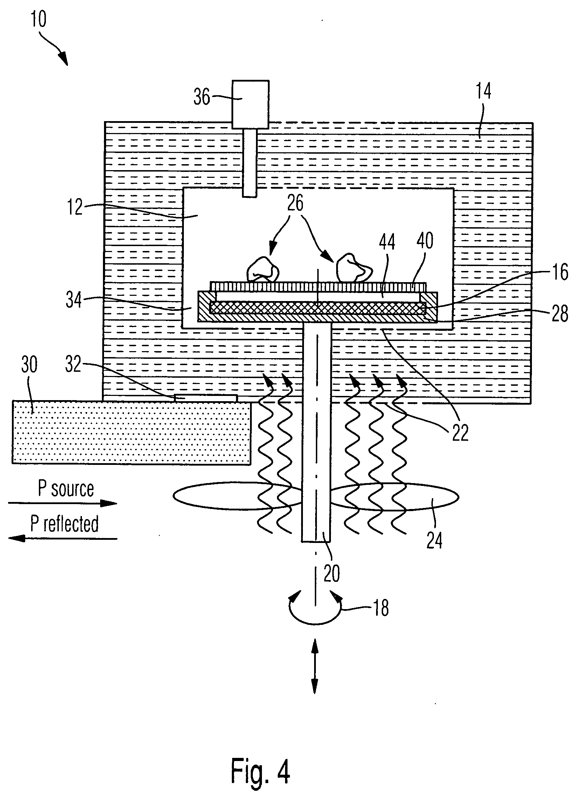

Die vierte Ausführungsform gemäß Fig. 4 weist ebenfalls einen flächigen Suszeptor 16 auf. Dieser ist bei dieser Ausführungsform in dem Drehteller 28 versenkt aufgenommen. Unter Belassung eines Luftspalts 44 zum Suszeptor 16 hin ist auf dem Rand des Drehtellers 28 die hochtemperaturstabile Aufnahme 40 abgestützt, die ihrerseits die dentalen Restaurationsteile 26 aufnimmt.

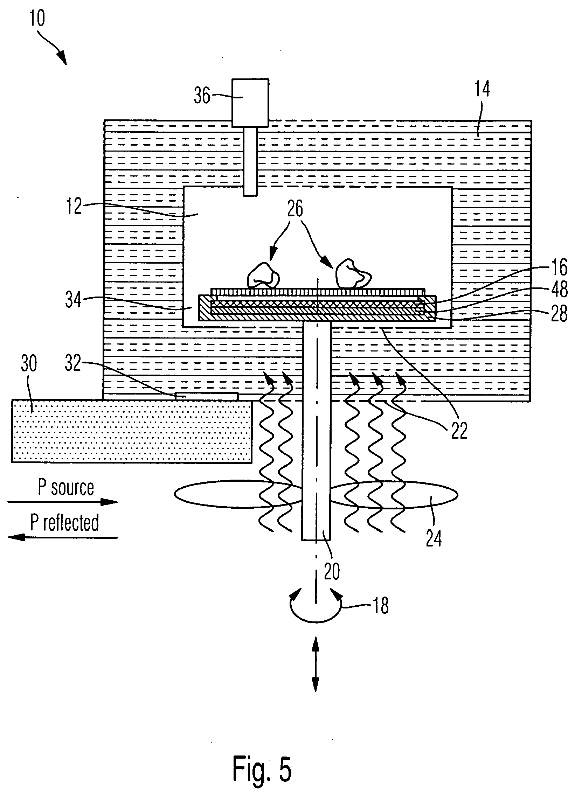

Die fünfte Ausführungsform gemäß Fig. 5 unterscheidet sich von der vierten Ausführungsform gemäß Fig. 4 darin, dass der ebenfalls versenkt angeordnete Suszeptor 16 mit einem Zusatzsuszeptor 48 versehen ist, der sich unter dem Suszeptor 16 erstreckt und aus Einzel-Suszeptorstrukturen besteht, wie aus Scheiben, Ringen, Stäben oder dergleichen, wobei auch ein Suszeptorgranulat zum Einsatz gelangen kann.

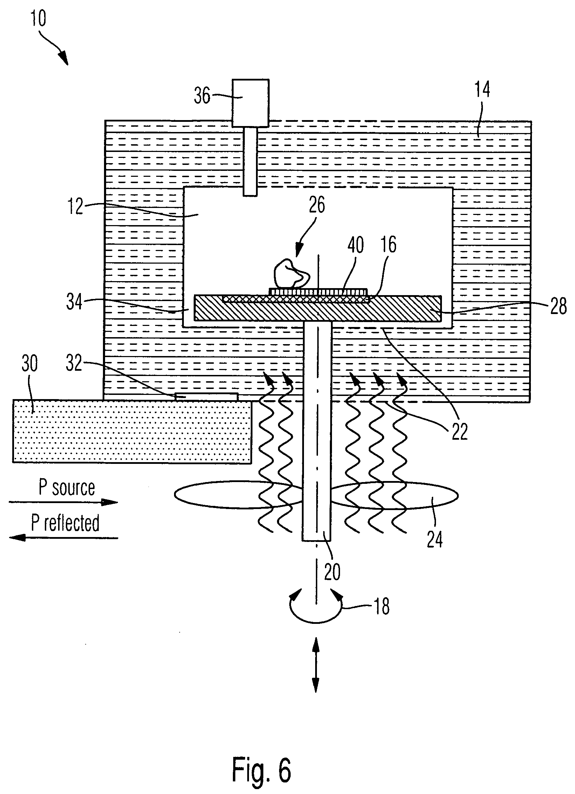

Eine asymmetrische Ausgestaltung des Suszeptors 16 auf dem Drehteller 28 ist aus der sechsten Ausführungsform gemäß Fig. 6 ersichtlich. Dort ist der Suszeptor versenkt in dem Drehteller 28 aufgenommen, wobei die Oberfläche von Drehteller und Suszeptor zueinander bündig ist. Lediglich im mittleren Teil des Suszeptors ist die hochtemperaturstabile Aufnahme 40 vorgesehen, die für die Aufnahme der dentalen Restaurationsteile bestimmt ist.

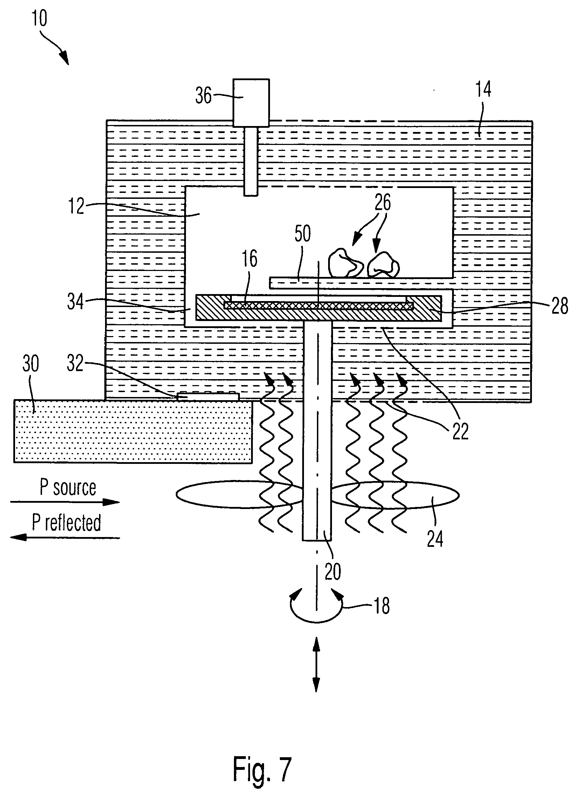

Die Ausführungsform gemäß Fig. 7 unterscheidet sich von den übrigen Ausführungsformen darin, dass die dentalen Restaurationsteile auf einem ofenfesten Stützglied 50 gelagert sind, dass sich seitlich vom Wärmedämmaterial 14 der Brennkammer 12 über den Drehteller 28 und den Suszeptor 16 erstreckt. Die Erstreckung erfolgt soweit, wie es möglich ist, und im dargestellten Ausführungsbeispiel asymmetrisch über etwas mehr als die Hälfte des Durchmessers des Drehtellers 28.

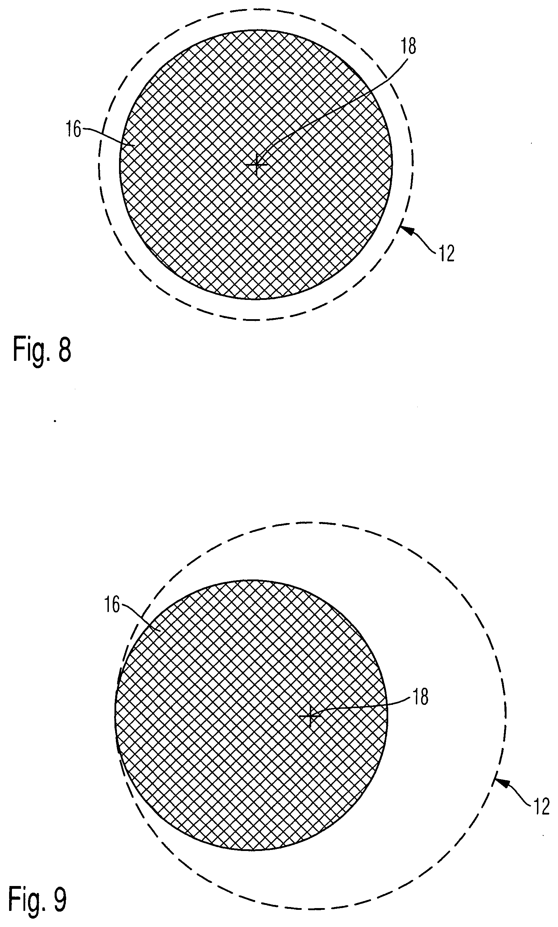

Aus Fig. 8 ist ersichtlich, in welcher Weise sich der Suszeptor 16, beispielsweise in der Ausführungsform gemäß Fig. 1 oder 3, in der Brennkammer 12 erstrecken kann. In dieser Ausführungsform ist er in der Draufsicht eine kreisrunde Scheibe, die um die Rotationsachse 18 umläuft.

Gemäß Fig. 9 ist eine weitere Ausführungsform eines Suszeptors 16 mit einer asymmetrisch gelagerten Ausgestaltung des Suszeptors 16 vorgesehen. Der Suszeptor 16 erstreckt sich in dieser Ausführungsform bis zum Innendurchmesser der Brennkammer 12 und weist einen Durchmesser von beispielsweise 3/5 des Innendurchmessers der Brennkammer 12 auf.

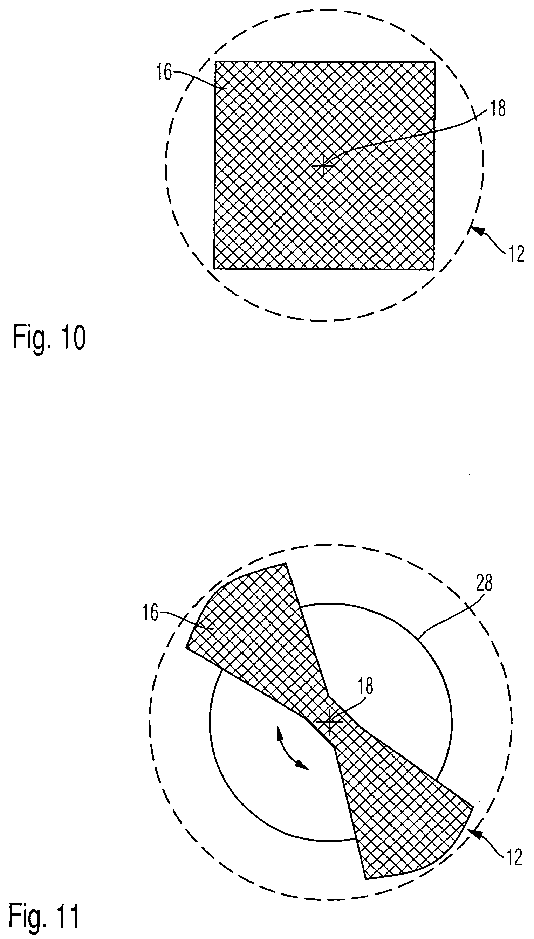

Eine symmetrische Ausgestaltung eines Suszeptors 16 ist aus der Ausführungsform gemäß Fig. 10 ersichtlich. Dort ist der Suszeptor 16 quaderförmig und symmetrisch auf der Rotationsachse gelagert.

Ebenfalls symmetrisch gelagert ist der Suszeptor 16 gemäß Fig. 11. Dieser Suszeptor ist nach der Art eines Propellers ausgebildet, so dass seine Drehbewegung bezogen auf den das darüber befindliche Restaurationsteil abwechselnd eine Abschattung und Freigabe erzeugt.

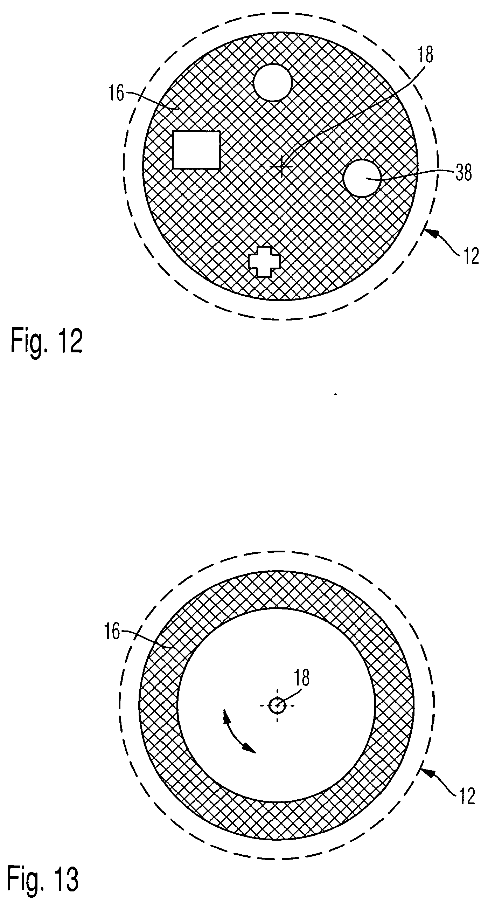

Gemäß Fig. 12 sind eine Mehrzahl - auch unterschiedlich geformten - Durchtrittsöffnungen 38 vorgesehen, die sich verteilt über den Suszeptor 16 erstrecken, der im übrigen kreisförmig ausgebildet und symmetrisch auf der Rotationsachse 18 gelagert ist.

Gemäß Fig. 13 ist der Suszeptor 16 ringförmig ausgebildet und erstreckt sich entlang des Ofenwandes der Brennkammer 12, jedoch symmetrisch um die Rotationsachse gelagert.

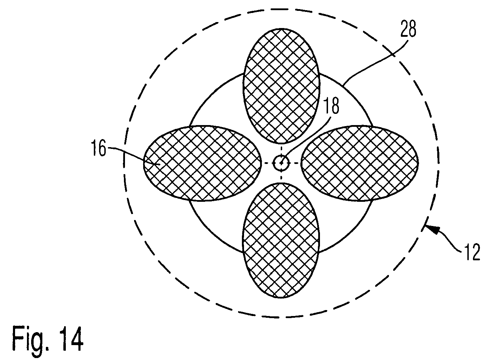

Die Ausführungsform gemäß Fig. 14 zeigt eine Mehrfachanordnung von Suszeptoren 16, die auf dem Drehteller 28 aufliegen. Die Anordnung ist symmetrisch um die Rotationsachse 18, und die Suszeptoren 16 sind in dem dargestellten Ausführungsbeispiel im Wesentlichen nach der Art eines vierblättrigen Kleeblatts ausgebildet.

## Patentansprüche

1. Mikrowellenofen für die Wärmebehandlung wenigstens eines dentalen Restaurationsteils mit einer Brennkammer, in der das dentale Restaurationsteil sowie wenigstens ein von einem Antriebsmotor in Rotation versetzbarer Suszeptor angeordnet ist, und einer Mikrowellen-Strah lungsquelle, die mit Hilfe des Suszeptors das dentale Restaurationsteil indirekt aufheizt, wobei
der Suszeptor (16) wenigstens teilweise mikrowellendicht ist und die Mikrowellen-Strahlungsquelle (30) unterhalb des Suszeptors (16) angeordnet ist,
**dadurch gekennzeichnet, dass**
die Mikrowellenstrahlungsquelle einen Hohlleiterausgang (32) aufweist und den Suszeptor (16) von seitlich unten beaufschlagt, und
der Suszeptor (16) aus Siliziumcarbit und/oder aus Zirkoniumdioxid und/oder einer Mischung aus SiC und SiNi besteht.

2. Mikrowellenofen nach Anspruch 1, **dadurch gekennzeichnet, dass** der Flächenschwerpunkt des Suszeptors (16) zur Rotationsachse (18) des Suszeptors (16) radial versetzt angeordnet ist, oder sich mit der Rotationsachse (18) des Suszeptors (16) deckt.

3. Mikrowellenofen nach einem der vorhergehenden Ansprüche, **dadurch gekennzeichnet, dass** der Suszeptor (16) in Form eines Ringes oder einer Scheibe ausgebildet ist und/oder wenigstens eine Auflagefläche für das dentaler Restaurationsteil (26) aufweist.

4. Mikrowellenofen nach einem der vorhergehenden Ansprüche, **dadurch gekennzeichnet, dass** der Suszeptor eine kreisrunde oder eine von der kreisrunden Form abweichende Außenkontur aufweist.

5. Mikrowellenofen nach den vorhergehenden Ansprüchen 1 bis 3, **dadurch gekennzeichnet, dass** der Suszeptor (16) in Form eines insbesondere wenigstens teilweise geschlossenen Gefässes ausgebildet ist.

6. Mikrowellenofen nach einem der vorhergehenden Ansprüche, **dadurch gekennzeichnet, dass** der Arbeitstemperaturbereich des Mikrowellenofens (10), der insbesondere ausschließlich mit Mikrowellenstrahlung arbeitet, zwischen Raumtemperatur und 2.200°C liegt.

7. Mikrowellenofen nach einem der vorhergehenden Ansprüche, **dadurch gekennzeichnet, dass** der Innenraum des Mikrowellenofens (10) gasdicht abgeschlossen ist und der Mikrowellenofen (10) mit einem nach Wahl des Benutzers vorgegebenen Gas füllbar und/oder evakuierbar ist.

8. Mikrowellenofen nach einem der vorhergehenden Ansprüche, **dadurch gekennzeichnet, dass** der oder die Suszeptoren (16) fest mit dem Drehteller (28) verbunden sind und auch bei nicht vorhandenem Dentalrestaurationsteil eine Grundlast für die Mikrowellenbeaufschlagung des Mikrowellenofens (10) darstellen.

9. Mikrowellenofen nach einem der vorhergehenden Ansprüche, **dadurch gekennzeichnet, dass** der mit dem Drehteller (28) verbundener Suszeptor als Modenstirrer wirkt.

10. Mikrowellenofen nach einem der vorhergehenden Ansprüche, **dadurch gekennzeichnet, dass** auf dem oder im Suszeptor (16) wenigstens eine hochtemperaturstabile Auflage angeordnet ist, die der Aufnahme des dentalen Restaurationsteiles (26) dient.

11. Mikrowellenofen nach einem der vorhergehenden Ansprüche, **dadurch gekennzeichnet, dass** über dem Suszeptor wenigstens eine fest in der Brennkammer angeordnete hochtemperaturstabile Auflage angeordnet ist, die der Aufnahme des dentalen Restaurationsteils dient.

12. Mikrowellenofen nach einem der vorhergehenden Ansprüche, **dadurch gekennzeichnet, dass** der Suszeptor (16) und/oder die hochtemperaturstabile Auflage und/oder das dentale Restaurationsteil (26) mit einem Temperaturmesselement, insbesondere einem optischen Temperaturmesselement zusammenwirkt und insbesondere der Suszeptor (16) und/oder der Antriebsmotor mit einer Messeinrichtung zur Messung der Mikrowellenleistung zusammenwirkt.

13. Mikrowellenofen nach Anspruch 12 **dadurch gekennzeichnet, dass** das optische Temperaturmesselement auf die Oberfläche des Suszeptors (16) und/oder die hochtemperaturstabile Auflage und/oder die Oberfläche des dentalen Restaurationsteils (26) ausgerichtet ist und der Schwerpunkt des Erfassungsbereiches des Temperaturmesselementes ausserhalb der Rotationsachse (18) des Antriebsmotors liegt.

14. Mikrowellenofen nach einem der vorhergehenden Ansprüche, dadurch gekennzeichent, dass die Position des Suszeptors (16) in Drehrichtung und/oder in vertikaler Richtung von dem Antriebsmotor veränderbar ist um die in der Messeinrichtung reflektierende Mikrowellenstrahlung zu minimieren.

15. Mikrowellenofen nach einem der vorhergehenden Ansprüche, **dadurch gekennzeichnet, dass** das Temperaturmesselement die Temperatur an einem bestimmten Punkt oder Bereich des Suszeptors (16) und/oder der hochtemperaturstabilen Auflage und/oder des dentalen Restaurationsteiles erfasst und der Antriebsmotor den Suszeptor (16) zumindest um ein paar Grad rotieren lässt, wenn eine Abweichung von einer vorgegebenen Solltemperatur festgestellt wird.

16. Mikrowellenofen nach einem der vorhergehenden Ansprüche, **dadurch gekennzeichnet, dass** der Suszeptor (16) konstant verbleibt oder zeitlich begrenzt oder in Intervallen in die gleiche Richtung oder abwechselnd in unterschiedliche Richtungen verdrehbar ist und/oder dass der Suszeptor (16) insbesondere während dessen Rotation vertikal verstellbar ist.

17. Mikrowellenofen nach einem der vorhergehenden Ansprüche, **dadurch gekennzeichnet, dass** der Suszeptor (16) eine Wärmeleitfähigkeit von mehr als 20 W/mK aufweist und insbesondere wenigstens teilweise eine Wandstärke von mindestens 0,5 mm aufweist.

18. Mikrowellenofen nach einem der vorhergehenden Ansprüche, **dadurch gekennzeichnet, dass** der Suszeptor insbesondere als Schale oder Scheibe oder Tiegel mehrteilig ausgebildet ist.

19. Mikrowellenofen nach einem der vorhergehenden Ansprüche, **dadurch gekennzeichnet, dass** der Suszeptor von einer scheibenförmigen Struktur gebildet ist, die sich aus wenigstens einer großflächigen Scheibe und/oder mehreren kleineren, insbesondere nebeneinander und/oder übereinander angeordneten scheiben-, ring-, stab- oder kugelförmigen Elementen zusammensetzt.

## Claims

1. A microwave oven for the thermal treatment of at least one dental restoration part, said microwave oven comprising a firing chamber, inside which the dental restoration part as well as at least one susceptor that may be rotated by means of a drive motor, are disposed, and a mircrowave radiation source that indirectly heats the dental restoration part with the aid of the susceptor wherein
the susceptor (16) at least partially is microwave-tight and the microwave radiation source (30) is arranged below the susceptor (16),
**characterized in that** the microwave radiation source comprises a hollow conductor exit (32) and radiates on the susceptor from laterally below, and **in that** the susceptor (16) consists of silicon carbide and/or zirconium dioxide and/or a mixture of SiC and SiNi.

2. The microwave oven as claimed in claim 1, **characterized in that** the center of area of the susceptor (16) relative to the axis of rotation (18) of the susceptor (16) is arranged in a radially offset manner thereto, or coincides with the axis of rotation (18) of the susceptor (16).

3. The microwave oven as claimed in one of the preceding claims, **characterized in that** the susceptor (16) has the shape of a ring or a disc and/or at least comprises a bearing surface for the dental restoration part (26).

4. The microwave oven as claimed in one of the preceding claims, **characterized in that** the susceptor comprises a circular outer contour or an outer contour that differs from the circular shape.

5. The microwave oven as claimed in one of the preceding claims 1 to 3, **characterized in that** the susceptor (16) is configured to have the shape of a container that is closed at least partially.

6. The microwave oven as claimed in one of the preceding claims **characterized in that** the working temperature range of the microwave oven (10) that in particular exclusively works with microwave radiation, is between room temperature and 2.200°C.

7. The microwave oven as claimed in one of the preceding claims, **characterized in that** the interior of the microwave oven (10) is sealed in a gas-tight manner and **in that** the microwave oven (10) may be filled with a given gas selected by the user and/or may be evacuated.

8. The microwave oven as claimed in one of the preceding claims, **characterized in that** the one or more susceptors (16) is/are firmly connected to the rotary table (28) and even in case of a nonexistent dental restoration part represent a base load for applying microwaves to the microwave oven (10).

9. The microwave oven as claimed in one of the preceding claims, **characterized in that** the susceptor that is connected to the rotary table (28) acts as a mode stirrer.

10. The microwave oven as claimed in one of the preceding claims, **characterized in that** at least one high temperature resistant support surface is arranged on or within the susceptor (16), said support surface serving to receive the dental restoration part (26).

11. The microwave oven as claimed in one of the preceding claims, **characterized in that** at least one high temperature resistant support surface that is fixedly arranged within the firing chamber, is disposed above the susceptor, said support surface serving to receive the dental restoration part.

12. The microwave oven as claimed in in one of the preceding claims, **characterized in that** the susceptor (16) and/or the high temperature resistant support surface and/or the dental restoration part (26) interact(s) with a temperature sensing element, in particular an optical temperature sensing element, and **in that** in particular the susceptor (16) and/or the drive motor interact(s) with a measuring device for sensing the microwave power.

13. The microwave oven as claimed in claim 12, **characterized in that** the optical temperature sensing element is directed towards the surface of the susceptor (16) and/or the high temperature resistant support surface and/or the surface of the dental restoration part (26) and **in that** the focus of the detecting area of the temperature sensing element lies outside the axis of rotation (18) of the drive motor.

14. The microwave oven as claimed in one of the preceding claims, **characterized in that** the position of the susceptor (16) is variable by the drive motor in the direction of rotation and/or in the vertical direction in order to minimize the reflecting microwave radiation within the measuring device.

15. The microwave oven as claimed in one of the preceding claims, **characterized in that** the temperature sensing element senses the temperature at a specific location or area of the susceptor (16) and/or the high temperature resistant support surface and/or the dental restoration part, and **in that** the drive motor causes the suspector (16) to rotate at least a few degrees even if a deviation from a given set temperature is determined.

16. The microwave oven as claimed in one of the preceding claims **characterized in that** the susceptor (16) remains constant or may be rotated in the same direction or alternately in different directions a limited period of time or at intervals, and/or **in that** the susceptor (16), in particular during its rotation, may be adjusted in the vertical direction.

17. The microwave oven as claimed in one of the preceding claims, **characterized in that** the susceptor (16) has a thermal conductivity of more than 20 W/mK and in particular at least partially comprises a wall thickness of at least 0.5 mm.

18. The microwave oven as claimed in one of the preceding claims, **characterized in that** the susceptor is formed in a multi-part design as a bowl, disc or crucible.

19. The microwave oven as claimed in one of the preceding claims **characterized in that** the susceptor is formed to have a disc-shaped structure which is comprised of at least one large-scale or extensive disc and/or several smaller disc-shaped, ring-shaped, rod-shaped or ball-shaped elements that are arranged side by side or one above the other.

## Revendications

1. Four à micro-ondes pour le traitement thermique d'au moins une pièce de restauration dentaire avec une chambre de combustion, dans laquelle la pièce de restauration dentaire est disposée, ainsi qu'au moins un suscepteur apte à être entraîné en rotation par un moteur d'entraînement et avec une source de rayonnement de micro-ondes qui chauffe indirectement la pièce de restauration dentaire à l'aide du suscepteur (16), où le suscepteur (16) est au moins partiellement imperméable aux micro-ondes et la source de rayonnement de micro-ondes (30) est disposé sous le suscepteur (16),
**caractérise en ce que** la source de rayonnement micro-ondes présente une sortie de conducteur creux et charge le suscepteur latéralement par en dessous, où le suscepteur (16) est de carbure de silicium et/ou de dioxyde de zirconium et/ou un mélange de SiC et SiNi.

2. Four à micro-ondes selon la revendication 1, **caractérisé en ce que** le centre de gravité de la surface du suscepteur (16) est disposé décalage radial à l'axe de rotation (18) du suscepteur (16), ou coïncide avec l'axe de rotation (18) du suscepteur (16).

3. Four à micro-ondes selon l'une des revendications précédentes,
**caractérisé en ce que** le suscepteur (16) est configuré sous la forme d'un anneau ou d'une plaque et où comprend au moins une surface d'appui pour la pièce de restauration dentaire (26).

4. Four à micro-ondes selon l'une des revendications précédentes,
**caractérisé en ce que** le suscepteur comprend un contour extérieur circulaire ou qui est différente de la forme circulaire.

5. Four à micro-ondes selon les revendications précédentes 1 à 3, **caractérisé en ce que** le suscepteur (16) se présente sous la forme d'un récipient en particulier au moins partiellement fermée.

6. Four à micro-ondes selon l'une des revendications précédentes,
**caractérisé en ce que** la plage de températures de fonctionnement du four à micro-ondes (10), qui fonctionne notamment exclusivement avec du rayonnement de micro-ondes, est comprise entre la température ambiante et 2.200 °C.

7. Four à micro-ondes selon l'une des revendications précédentes,
**caractérisé en ce que** l'intérieur du four à micro-ondes (10) est étanche aux gaz et que le four à micro-ondes (10) peut être rempli et/ou vidé avec un gaz déterminé selon le choix de l'utilisateur.

8. Four à micro-ondes selon l'une des revendications précédentes,
**caractérisé en ce que** le ou les suscepteurs (16) sont connectés fermement au plateau tournant (28) et représentent une charge de base pour l'impact des micro-ondes du four à micro-ondes (10) même si aucune pièce de restauration dentaire n'est présente.

9. Four à micro-ondes selon l'une des revendications précédentes,
**caractérisé en ce que** le suscepteur connecté au plateau tournant (28) agit comme brasseur d'ondes.

10. Four à micro-ondes selon l'une des revendications précédentes,
**caractérisé en ce que** au moins un support stable à température élevée est disposé sur ou dans le suscepteur (16), qui sert à accueillir la pièce de restauration dentaire (26).

11. Four à micro-ondes selon l'une des revendications précédentes,
**caractérisé en ce qu'**au moins un support stable à température élevée est disposé dans la chambre de combustion au dessus-du le suscepteur, qui sert à accueillir la pièce de restauration dentaire.

12. Four à micro-ondes selon l'une des revendications précédentes,
**caractérisé en ce que** le suscepteur (16) et/ou le support stable à température élevée et/ou la pièce de restauration dentaire (26) interagit avec un élément de mesure de la température, en particulier un élément optique de mesure de la température et surtout le suscepteur (16) et/ou le moteur d'entraînement interagit avec un dispositif de mesure pour la mesure de la puissance micro-onde.

13. Four à micro-ondes selon l'une des revendications précédentes,
**caractérisé en ce que** l'élément optique de mesure de la température est dirigé sur la surface du suscepteur (16) et/ou du support stable à température élevée et/ou la surface de la pièce de restauration dentaire (26) et la mise au point de la plage de détection de l'élément de mesure de la température se trouve en dehors de l'axe de rotation (18) du moteur d'entraînement.

14. Four à micro-ondes selon l'une des revendications précédentes,
**caractérisé en ce que** la position du suscepteur (16) peut être modifié par le moteur d'entraînement dans le sens de rotation et/ou dans l'axe vertical afin de minimiser le rayonnement de micro-ondes réfléchies dans le dispositif de mesure.

15. Four à micro-ondes selon l'une des revendications précédentes,
**caractérisé en ce que** l'élément de mesure de la température détecte la température à un point ou une zone spécifique du suscepteur (16) et/ou du support stable à température élevé et/ou de la pièce de restauration dentaire et le moteur d'entraînement fait tourner le suscepteur (16) au moins quelques degrés, lorsqu'un écart par rapport à une température de consigne prédéterminée est détecté.

16. Four à micro-ondes selon l'une des revendications précédentes,
**caractérisé en ce que** le suscepteur (16) reste constant, ou peut être tourné pour une durée de temps limitée ou à des intervalles dans la même direction, ou alternativement dans différentes directions et/ou que le suscepteur (16) en particulier au cours de sa rotation est réglable verticalement.

17. Four à micro-ondes selon l'une des revendications précédentes,
**caractérisé en ce que** le suscepteur (16) présente une conductivité thermique supérieure à 20 W/mK et en particulier au moins partiellement une épaisseur de paroi d'au moins 0,5 mm.

18. Four à micro-ondes selon l'une des revendications précédentes,
**caractérisé en ce que** le suscepteur est disposé en particulier comme coque ou disque est creuset en plusieurs pièces.

19. Four à micro-ondes selon l'une des revendications précédentes,
**caractérisé en ce que** le suscepteur est formé d'une structure en forme de disque, qui est composé d'au moins un disque d'une grande surface ou plusieurs petits éléments en forme de disque, anneau, barre, ou sphère en particulier disposés côte à côte ou les uns au-dessus des autres.
